# EUROPÄISCHE PATENTSCHRIFT

(11) **EP 3 526 073 B1**
(45) Veröffentlichungstag und Bekanntmachung des Hinweises auf die Patenterteilung: **21.02.2024**
(21) Anmeldenummer: 17784937.9
(22) Anmeldetag: 16.10.2017
(51) Int. Cl.: B60L 53/18, B60L 53/302, H02J 7/04, H02J 7/00, H01R 13/66, H01R 13/02, H02J 7/02, B60L 53/68

(54) **TEMPERATURÜBERWACHTES LADESYSTEM ZUR ÜBERTRAGUNG VON ELEKTRISCHEN LADESTRÖMEN**
CHARGING SYSTEM FOR TRANSFER OF ELECTRIC CHARGING CURRENTS WITH TEMPERATURE MONITORING
SYSTÈME DE CHARGE DE TRANSFER DE COURANTS DE CHARGE COMPRENANT SURVEILLANCE DE TEMPÉRATURE

(30) Priorität: 14.10.2016 DE 102016220110
(43) Veröffentlichungstag der Anmeldung: 21.08.2019
(73) Patentinhaber: Phoenix Contact e-Mobility GmbH, 32816 Schieder-Schwalenberg (DE)
(72) Erfinder: FÜHRER, Thomas, 32825 Blomberg (DE)
(74) Vertreter: Richly & Ritschel Patentanwälte PartG mbB
(86) Internationale Anmeldenummer: PCT/EP2017/076275
(87) Internationale Veröffentlichungsnummer: WO 2018/069542

(56) Entgegenhaltungen:
- EP-A1- 2 555 375
- EP-A1- 2 765 671
- EP-A1- 2 819 265
- WO-A2-2014/161803
- DE-A1-102011 051 052
- DE-A1-102014 111 185
- US-A1- 2011 181 294
- US-B2- 8 723 477

## Beschreibung

Die vorliegende Erfindung betrifft ein Ladesystem zur Übertragung eines elektrischen Ladestroms an einen Energieempfänger mit einer Temperaturüberwachung. Insbesondere betrifft die vorliegende Erfindung ein Ladesystem zum Übertragen eines elektrischen Stroms an ein elektrisch antreibbares Fahrzeug.

Aus dem Stand der Technik sind Ladesysteme mit Steckverbindern bzw. Ladestecker für elektrisch antreibbare Fahrzeuge bekannt, die zur Verbindung mit einer korrespondierenden und beispielsweise als Ladebuchse ausgebildeten Verbindungsvorrichtung ausgebildet sind. Diesbezüglich wird auf den in der DE 10 2012 105 774 B3 offenbarten Ladestecker verwiesen. In dem Ladestecker sind Leistungskontakte angeordnet, über die elektrische Ladeströme an einen elektrischen Energieempfänger, beispielsweise einem Akkumulator eines Fahrzeuges, übertragbar sind. Der Leistungskontakt ist zur galvanischen Verbindung mit einer elektrischen Energiequelle, beispielsweise eine Ladestation oder im Allgemeinen mit einem elektrischen Versorgungsnetz ausgebildet. Zu diesem Zweck sind die Leistungskontakte jeweils mit einer Ladeleitung fest verbunden.

Aufgrund durch die Leistungskontakte fließender Ladeströme heizen sich die Leistungskontakte unweigerlich aufgrund von ohmschen Stromwärmeverlusten auf. Das Aufheizen der Leistungskontakte ist jedoch auf eine Grenztemperaturerhöhung limitiert. So ist beispielsweise gemäß der Norm IEC 62196-3 die Grenztemperaturerhöhung auf 50K limitiert. Dies wiederum führt bei größtenteils genormten Steckverbindergeometrien zu einem maximalen Ladestrom von bis zu 200 A Dauerlast. Bei gekühlten Systemen, bei denen die Leistungskontakte und/oder die Ladekabel gekühlt werden, sind Ladeströme bis zu 400 A realisierbar.

Um ein Überhitzen der Steckverbinder zu vermeiden, ist es aus dem Stand der Technik bekannt, Steckverbinder mit Temperatursensoren zu versehen. Diese überwachen die Temperatur des Steckverbinders. Sobald die Temperatur einen definierten Grenzwert überschreitet, wird mittels einer Überwachungselektronik durch Ausgabe eines Steuersignals oder mehrerer Steuersignale der Ladevorgang unterbrochen oder der Ladestrom reduziert.

So beschreibt die DE 10 2009 034 886 A1 eine Steckvorrichtung für ein Ladekabel zur Verbindung eines Elektrofahrzeuges mit einer Ladestation. Dabei umfasst die Steckvorrichtung ein Gehäuse und dem Gehäuse zugeordnete elektrische Kontakte zum Anschluss an eine Anschlusseinrichtung in der Ladestation oder in dem Elektrofahrzeug. Zudem ist in dem Gehäuse ein als Thermistor ausgebildetes Temperaturerfassungsmittel vorgesehen, wobei über das Temperaturerfassungsmittel die Temperatur im Gehäuse auswertbar ist.

WO 2014/161803 A2, US 8 723 477 B2, DE 10 2014 111185 A1, US 2011/181294 A1 offenbaren Lade- oder Leistungssysteme mit Temperatursensoren und/oder Umgebungssensoren gemäß dem Stand der Technik.

Der vorliegenden Erfindung liegt die Aufgabe zugrunde, ein Ladesystem zur Übertragung eines elektrischen Ladestroms an einen Energieempfänger bereitzustellen, das verbessert auf Umweltbedingungen des Ladesystems angepasst ist, so dass Fehlabschaltungen des Ladesystems vermieden oder zumindest verringert werden.

Die der vorliegenden Erfindung zugrundeliegende Aufgabe wird durch ein Ladesystem mit den Merkmalen des Anspruchs 1 gelöst. Vorteilhafte Ausführungen des Ladesystems sind in den abhängigen Ansprüchen beschrieben.

Im Genaueren wird die der vorliegenden Erfindung zugrundeliegende Aufgabe durch ein Ladesystem zur Übertragung eines elektrischen Ladestroms an einen Energieempfänger gemäß Anspruch 1 gelöst.

Mittels des erfindungsgemäßen Ladesystems werden Umgebungstemperaturen des Ladesystems bei der Bestimmung, ob ein Steuersignal zur Steuerung bzw. Regelung des Ladestroms ausgegeben wird, berücksichtigt. Folglich wird mittels des erfindungsgemäßen Ladesystems verhindert, dass in sehr kalten Umgebungen, bei denen die stromführenden Bauteile zu Beginn eines Ladevorganges ebenfalls eine geringe Temperatur aufweisen, eine unzulässige Temperaturerhöhung eines stromführenden Bauteils unbemerkt bleibt. Ferner wird mittels des erfindungsgemäßen Ladesystems verhindert, dass in warmen Umgebungen, bei denen die stromführenden Bauteile zu Beginn eines Ladevorganges ebenfalls eine erhöhte Temperatur aufweisen, voreilig eine vermeintliche Überhitzung und somit ein Fehler im Ladesystem ausgegangen wird. Weiterhin können mittels des erfindungsgemäßen Ladesystems Schwankungen der Umgebungstemperatur, wie diese im Verlauf eines Tages und im Verlauf eines Jahres Jahreszeitbedingt auftreten, Rechnung getragen werden.

Bei dem erfindungsgemäßen Ladesystem wird folglich davon ausgegangen und es wird vorausgesetzt, dass bei einem intakten Ladesystem, bei dem folglich die stromführenden Bauteile des Ladesystems bestimmungsgemäß funktionieren, eine unzulässige Erwärmung der stromführenden Bauteile nicht auftritt. Mit anderen Worten wird davon ausgegangen, dass eine unzulässige Erwärmung eines stromführenden Bauteils durch einen plötzlich auftretenden Fehler oder durch sukzessiven Verschleiß verursacht wird. Folglich ist eine Erwärmung eines stromführenden Bauteils außerhalb vorgegebener Grenzen kein erlaubter Betriebszustand.

Der Energieempfänger ist vorzugsweise ein Akkumulator und/oder eine Autobatterie zum Antreiben eines Kfz.

Die Verbindungsvorrichtung kann vorzugsweise als Ladebuchse eines Kraftfahrzeugs ausgebildet sein.

Die Kopplung des Temperatursensors und/oder des Umgebungstemperatursensors mit der elektronischen Steuerungseinrichtung erfolgt vorzugsweise über eine galvanische Verbindung (beispielsweise mittels eines Drahtes) und/oder drahtlos über Funk.

Mittels des Steuersignals / der Steuersignale, die von der elektronischen Steuerungseinrichtung ausgegeben wird / werden, erfolgt vorzugsweise eine Schnellabschaltung des Ladesystems und/oder eine Ladestrombegrenzung. Ferner können vorzugsweise Wartungshinweise in Abhängigkeit der Steuerungssignale ausgebgeben werden.

Die Ermittlung der Differenztemperatur erfolgt vorzugsweise während eines gesamten Ladebetriebs des Ladesystems.

Das Ladesystem ist derart ausgebildet, dass die elektronische Steuerungseinrichtung dazu ausgebildet ist, bei Überschreiten einer vorgegebenen Grenzdifferenztemperatur durch die Differenztemperatur ein Steuersignal zum Steuern des Ladestroms auszugeben.

Das entsprechend ausgebildete Ladesystem weist den Vorteil auf, dass die Grenzdifferenztemperatur im Vorfeld vor einer Inbetriebnahme des Ladesystems bestimmt werden kann. Vor der Inbetriebnahme des Ladesystems liegen üblicherweise keine Defekte des Ladesystems vor.

Die vorgegebene Grenzdifferenztemperatur ist in der elektronischen Steuerungseinrichtung und/oder in einer mit der elektronischen Steuerungseinrichtung zum Austausch von elektronischen Daten verbundenen Speichereinrichtung hinterlegt. Beispielsweise kann die Grenzdifferenztemperatur während eines Musterungsprozesses, bei dem das Ladesystem nach dessen Herstellung vorzugsweise bei unterschiedlichen Umgebungstemperaturen getestet wird, bestimmt werden und in der elektronischen Steuerungseinrichtung oder der Speichereinrichtung gespeichert werden. Vorzugsweise kann die Grenzdifferenztemperatur auch im Rahmen einer Simulation des Ladesystems bestimmt werden und in der elektronischen Steuerungseinrichtung oder der Speichereinrichtung gespeichert werden.

Das Ladesystem ist derart ausgebildet, dass das Ladesystem ferner eine Speichereinrichtung aufweist, die mit der elektronischen Steuerungseinrichtung zum Austausch von elektronischen Daten verbunden ist.

Das entsprechend ausgebildete Ladesystem bietet den Vorteil, dass zusätzlich oder alternativ zu der Grenzdifferenztemperatur auch weitere zur Überprüfung des Ladesystems relevante Daten gespeichert werden können.

Weiter ist das Ladesystem derart ausgebildet, dass in der Speichereinrichtung eine Vielzahl von jeweils unterschiedlichen Umgebungstemperaturen zugeordneten Grenzdifferenztemperaturen gespeichert ist, wobei die elektronische Steuerungseinrichtung dazu ausgebildet ist, die Differenztemperatur mit der der ermittelten Umgebungstemperatur zugeordneten Grenzdifferenztemperatur zu vergleichen und bei Überschreiten der Grenzdifferenztemperatur durch die Differenztemperatur das Steuersignal zum Steuern des Ladestroms auszugeben.

Die Speicherung der jeweils unterschiedlichen Umgebungstemperaturen zugeordneten Grenzdifferenztemperaturen kann beispielsweise in einer Tabelle der elektronischen Speichereinrichtung erfolgen. Beispielweise und nicht begrenzend zu verstehen kann bei einer Umgebungstemperatur zwischen 0°C und 5°C eine Grenzdifferenztemperatur von 30°C abgespeichert sein. Weiter beispielshaft und nicht begrenzend zu verstehen kann bei einer Umgebungstemperatur zwischen 6°C und 10°C eine Grenzdifferenztemperatur von 35°C abgespeichert sein. Wenn bei einer entsprechenden und beispielhaften Tabelle bei einer Umgebungstemperatur von 4°C eine Differenztemperatur von 33°C ermittelt wird, wird von der elektronischen Steuerungseinrichtung ein Steuersignal zum Steuern des Ladestroms ausgegeben. Ferner wird, wenn bei einer entsprechenden und beispielhaften Tabelle bei einer Umgebungstemperatur von 8°C eine Differenztemperatur von 38°C ermittelt, von der elektronischen Steuerungseinrichtung ein Steuersignal zum Steuern des Ladestroms ausgegeben.

Vorzugsweise ist das Ladesystem, derart ausgebildet, dass in der Speichereinrichtung ein einem zeitlichen Verlauf des Ladestroms zugeordneter zeitlicher Sollverlauf der Differenztemperatur gespeichert ist, wobei die elektronische Steuerungseinrichtung dazu ausgebildet ist, während eines Ladevorgangs einen zeitlichen Verlauf der Differenztemperatur zu speichern, den zeitlichen Verlauf der Differenztemperatur mit dem zeitlichen Sollverlauf der Differenztemperatur zu vergleichen, und bei Überschreiten des Sollverlaufs der Differenztemperatur um eine vorgegebene Abweichung durch den Verlauf der Differenztemperatur das Steuersignal zum Steuern des Ladestroms auszugeben.

Das entsprechend ausgebildete Ladesystem weist den Vorteil auf, dass es eine geringere Anfälligkeit für Fehlmessungen aufweist. Ferner weist das entsprechend ausgebildete Ladesystem eine geringere Anfälligkeit für ein unnötiges Abschalten/Verringern des Ladestroms auf, wenn beispielsweise die Grenzdifferenztemperatur lediglich über einen kurzen Zeitraum während des Ladevorganges überschritten wird.

Vorzugsweise ist das Ladesystem, derart ausgebildet, dass in der Speichereinrichtung eine Vielzahl von jeweils unterschiedlichen Umgebungstemperaturen und jeweils einem zeitlichen Verlauf des Ladestroms zugeordneten zeitlichen Sollverläufen der Differenztemperatur gespeichert ist, wobei die elektronische Steuerungseinrichtung ist dazu ausgebildet, während eines Ladevorgangs einen zeitlichen Verlauf der Differenztemperatur zu speichern, den zeitlichen Verlauf der Differenztemperatur mit dem der Umgebungstemperatur zugeordneten zeitlichen Sollverlauf der Differenztemperatur zu vergleichen, und bei Überschreiten des der Umgebungstemperatur zugeordneten Sollverlaufs der Differenztemperatur um eine vorgegebene Abweichung durch den Verlauf der Differenztemperatur das Steuersignal zum Steuern des Ladestroms auszugeben.

Das entsprechend ausgebildete Ladesystem weist den Vorteil auf, dass es eine nochmals geringere Anfälligkeit für Fehlmessungen aufweist. Ferner weist das entsprechend ausgebildete Ladesystem eine nochmals geringere Anfälligkeit für ein unnötiges Abschalten/Verringern des Ladestroms auf, wenn beispielsweise die Grenzdifferenztemperatur lediglich über einen kurzen Zeitraum während des Ladevorganges überschritten wird.

Weiter vorzugsweise ist das Ladesystem derart ausgebildet, dass die elektronische Steuerungseinrichtung dazu ausgebildet ist, eine Vielzahl von während Ladevorgängen ermittelter Differenztemperaturverläufe in der Speichereinrichtung zu speichern, wobei die Differenztemperaturverläufe jeweils einer während des jeweiligen Ladevorganges gemessenen Umgebungstemperatur und einem Verlauf des jeweiligen Ladestroms zugeordnet sind. Ferner ist die elektronische Steuerungseinrichtung dazu ausgebildet, basierend auf den gespeicherten Differenztemperaturverläufen jeweiligen Umgebungstemperaturen und jeweiligen Ladestromverläufen zugeordnete Durchschnittsdifferenztemperaturen zu ermitteln, und die Differenztemperatur mit der der ermittelten Umgebungstemperatur und dem ermittelten Verlauf des Ladestroms zugeordneten Durchschnittsdifferenztemperatur zu vergleichen und bei Überschreiten der Durchschnittsgrenzdifferenztemperatur durch die Differenztemperatur das Steuersignal zum Steuern des Ladestroms auszugeben.

Das entsprechend ausgebildete Ladesystem weist den Vorteil auf, dass eine Historie der Temperaturen der stromführenden Bauteile in die Bestimmung der Grenzdifferenztemperaturen berücksichtigt wird.

Vorzugsweise ist das Ladesystem derart ausgebildet, dass das zumindest eine stromführende Bauteil ein Leistungskontakt des Ladesteckers ist.

Insbesondere die Leistungskontakte des Ladesteckers sind einer hohen Temperaturerhöhung während eines Ladevorganges unterworfen, so dass eine Messung der Temperatur der Leistungskontakte eine erhöhte Betriebssicherheit des Ladesystems bewirkt.

Weiter vorzugsweise ist das Ladesystem derart ausgebildet, dass das Ladesystem ein Ladekabel mit zumindest zwei innerhalb des Ladekabels angeordneten Ladeleitungen aufweist, wobei das zumindest eine stromführende Bauteil eine Ladeleitung des Ladekabels ist.

Auch die Ladeleitungen sind einer hohen Temperaturerhöhung während eines Ladevorganges unterworfen, so dass eine Messung der Temperatur der Ladeleitungen eine erhöhte Betriebssicherheit des Ladesystems bewirkt.

Vorzugsweise ist das Ladesystem derart ausgebildet, dass der Umgebungstemperatursensor an einer Außenseite des Ladesteckers angeordnet ist.

Insbesondere kann der Umgebungstemperatursensor im Bereich eines Griffs des Ladesteckers angeordnet sein. Die Außenseite des Ladesteckers erfährt üblicherweise während eines Ladevorganges lediglich eine geringe Temperaturerhöhung, so dass bei einer entsprechenden Anbringung des Umgebungstemperatursensors an dem Ladestecker eine zuverlässige Bestimmung der Umgebungstemperatur erfolgen kann.

Weiter vorzugsweise ist das Ladesystem derart ausgebildet, dass dieses eine Ladestation aufweist, die mit dem Ladestecker elektrisch gekoppelt ist, wobei der Umgebungstemperatursensor an der Ladestation angeordnet ist.

Die Ladestation erfährt während eines Ladevorganges keine oder lediglich eine geringe Temperaturerhöhung, so dass bei einer entsprechenden Anbringung des Umgebungstemperatursensors an der Ladestation eine zuverlässige Bestimmung der Umgebungstemperatur erfolgen kann.

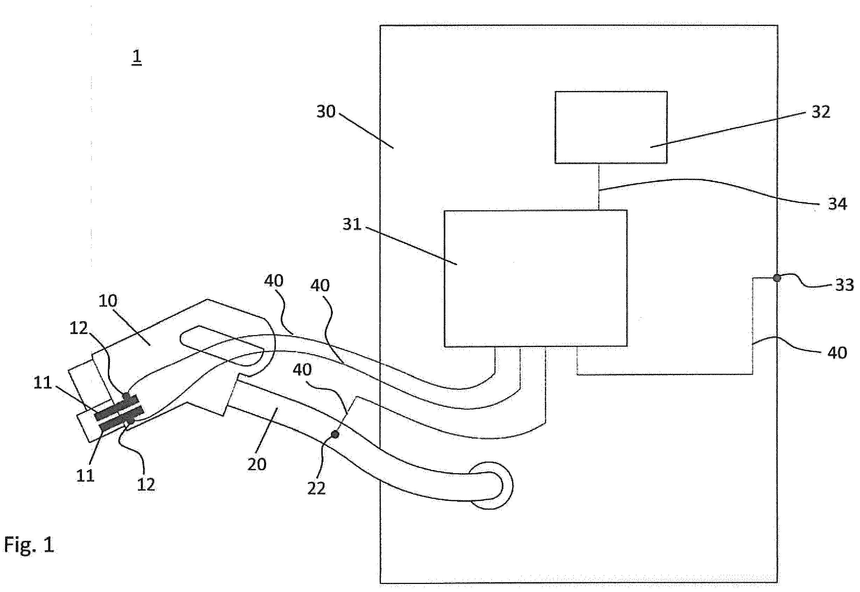

Weitere Vorteile, Einzelheiten und Merkmale der Erfindung ergeben sich nachfolgend aus dem erläuterten Ausführungsbeispiel. Dabei zeigt
- Figur 1:: einen schematischen Aufbau eines erfindungsgemäßen Ladesystems zur Übertragung eines elektrischen Ladestroms an einen Energieempfänger.

Figur 1 zeigt ein erfindungsgemäßes Ladesystem 1 zu Übertragung eines elektrischen Ladestroms an einen Energieempfänger. Der Energieempfänger kann beispielsweise ein Akkumulator und/oder eine Autobatterie zum Antreiben eines Kraftfahrzeugs sein. Es ist ersichtlich, dass das Ladesystem 1 einen Ladestecker 10 zur Kopplung mit einer korrespondierenden Verbindungsvorrichtung aufweist. Die Verbindungsvorrichtung kann beispielsweise eine Ladebuchse eines Kraftfahrzeugs sein. Ferner ist aus Figur 1 ersichtlich, dass in einem vorderen Bereich des Ladesteckers 10 zwei stromführende Bauteile 11 in Form von Leistungskontakten 11 angeordnet sind. Die Leistungskontakte 11 sind, obschon in Figur 1 nicht dargestellt, mit Ladeleitungen eines Ladekabels 20 galvanisch verbunden. Das Ladekabel 20 wiederum ist elektrisch mit einer Ladestation 30 gekoppelt. Das erfindungsgemäße Ladesystem 1 umfasst ferner eine elektronische Steuerungseinrichtung 31, die in dem dargestellten Ausführungsbeispiel innerhalb der Ladestation 30 angeordnet ist.

Das Ladesystem 1 weist mehrere Temperatursensoren 12, 22 auf, die zur Bestimmung einer Temperatur eines stromführenden Bauteils 11, 20 des Ladesystems 1 ausgebildet sind. Erste Temperatursensoren 12 sind jeweils zur Bestimmung einer Temperatur der Leistungskontakte 11 ausgebildet. Zu diesem Zweck können die ersten Temperatursensoren 12 vorzugsweise mit den jeweiligen Leistungskontakten in 11 in direktem Kontakt stehen.

Ein zweiter Temperatursensor 22 ist zur Bestimmung einer Temperatur des Ladekabels 20 ausgebildet. Im Genaueren kann der zweite Temperatursensor 22 zur Bestimmung einer Temperatur von Ladeleitungen ausgebildet sein, die innerhalb des Ladekabels 20 verlaufen. Die Ladeleitungen sind in Figur 1 nicht dargestellt.

Das erfindungsgemäße Ladesystem 1 weist ferner einen Umgebungstemperatursensor 33 auf, der zu Bestimmung einer Umgebungstemperatur des Ladesystems 1 ausgebildet ist. In dem dargestellten Ausführungsbeispiel ist der Umgebungstemperatursensor 33 an der Ladestation 30 angeordnet. Jedoch ist die vorliegende Erfindung auf eine entsprechende Anordnung des Umgebungstemperatursensors 33 nicht beschränkt. Der Umgebungstemperatursensor 33 kann alternativ und/oder zusätzlich auch an einer Außenseite des Ladesteckers 10 angeordnet sein.

Die ersten Temperatursensoren 12 sind mit der elektronischen Steuerungseinrichtung 31 zum Ausgeben von die jeweiligen Temperaturen der Leistungskontakte 11 repräsentierenden Temperaturmessdaten gekoppelt. Diese Kopplung erfolgt dabei in dem dargestellten Ausführungsbeispiel mittels Datenleitungen 40, die zwischen den ersten Temperatursensoren 12 und der elektronischen Steuerungseinrichtung 31 einen Datenaustausch ermöglichen. Die vorliegende Erfindung ist aber auf eine entsprechende drahtgebundene Datenkopplung zwischen den ersten Temperatursensoren 12 und der elektronischen Steuerungseinrichtung 31 nicht beschränkt, denn eine Datenkopplung kann beispielsweise auch drahtlos über Funk erfolgen. Auch der zweite Temperatursensor 22 ist mit der elektronischen Steuerungseinrichtung 31 zum Ausgeben von die Temperatur des Ladekabels 20 bzw. der Ladeleitungen innerhalb des Ladekabels 20 repräsentierenden Temperaturmessdaten gekoppelt. Diese Kopplung erfolgt dabei in dem dargestellten Ausführungsbeispiel ebenfalls mittels einer Datenleitung 40, die zwischen dem zweiten Temperatursensor 22 und der elektronischen Steuerungseinrichtung 31 einen Datenaustausch ermöglichen. Die vorliegende Erfindung ist aber auf eine entsprechende drahtgebundene Datenkopplung zwischen dem zweiten Temperatursensor 22 und der elektronischen Steuerungseinrichtung 31 nicht beschränkt, denn eine Datenkopplung kann beispielsweise auch drahtlos über Funk erfolgen.

Auch der Umgebungstemperatursensor 33 ist mit der elektronischen Steuerungseinrichtung 31 mittels einer Datenleitung 40 zum Ausgeben von Umgebungstemperaturmessdaten elektronisch gekoppelt. In dem dargestellten Ausführungsbeispiel ist die Datenleitung 40 drahtgebunden ausgeführt. Jedoch ist die vorliegende Erfindung auf eine entsprechende Datenleitung 40 nicht beschränkt, denn die Datenleitung 40 kann zwischen dem Umgebungstemperatursensor 33 und der elektronischen Steuerungseinrichtung 31 auch drahtlos beispielsweise über Funk erfolgen.

Die elektronische Steuerungseinrichtung 31 ist dazu ausgebildet, basierend auf den Temperaturmessdaten und den Umgebungstemperaturmessdaten eine Differenztemperatur zwischen der Temperatur des stromführenden Bauteils 11, 20 und der Umgebungstemperatur zu ermitteln und basierend auf der ermittelten Differenztemperatur ein Steuersignal zum Steuern des Ladestroms auszugeben. Im Genaueren ist die elektronische Steuerungseinrichtung 31 dazu ausgebildet, basierend auf den Temperaturmessdaten, die von den ersten Temperatursensoren 12 an die elektronische Steuerungseinrichtung 31 übertragen werden, und basierend auf den Umgebungstemperaturmessdaten, die von dem Umgebungstemperatursensor 33 an die elektronische Steuerungseinrichtung 31 übertragen werden, eine Differenztemperatur (die einer Differenz der Temperatur der Leistungskontakte 11 und der Umgebungstemperatur entspricht) zu ermitteln. Zusätzlich oder alternativ ist die elektronische Steuerungseinrichtung 31 dazu ausgebildet, basierend auf den Temperaturmessdaten, die von dem zweiten Temperatursensor 22 an die elektronische Steuerungseinrichtung 31 übertragen werden, und basierend auf den Umgebungstemperaturmessdaten, die von dem Umgebungstemperatursensor 33 an die elektronische Steuerungseinrichtung 31 übertragen werden, eine Differenztemperatur (die einer Differenz der Temperatur des Ladekabels 20 und der Umgebungstemperatur entspricht) zu ermitteln. Die elektronische Steuerungseinrichtung 31 gibt dann basierend auf der ermittelten Differenztemperatur ein Steuersignal zum Steuern des Ladestroms aus. Beispielsweise ist die elektronische Steuerungseinrichtung 31 dazu ausgebildet, bei Überschreiten einer vorgegebenen Grenzdifferenztemperatur durch die Differenztemperatur ein Steuersignal zum Steuern des Ladestroms auszugeben.

Aus Figur 1 ist ferner ersichtlich, dass das Ladesystem 1 ferner eine Speichereinrichtung 32 aufweist, die mit der elektronischen Steuerungseinrichtung 31 zum Austausch von elektronischen Daten verbunden ist. Die Verbindung zwischen der Speichereinrichtung 32 und der elektronischen Steuerungseinrichtung 31 erfolgt über eine Datenleitung 34.

In der Speichereinrichtung 32 ist eine Vielzahl von jeweils unterschiedlichen Umgebungstemperaturen zugeordneten Grenzdifferenztemperaturen gespeichert, wobei dann die elektronische Steuerungseinrichtung 31 dazu ausgebildet ist, die Differenztemperatur mit der der ermittelten Umgebungstemperatur zugeordneten Grenzdifferenztemperatur zu vergleichen und bei Überschreiten der Grenzdifferenztemperatur durch die Differenztemperatur der Steuerungssignale zum Steuern des Ladestroms auszugeben.

Zusätzlich kann in der Speichereinrichtung 32 ein einem zeitlichen Verlauf des Ladestroms zugeordneter zeitlicher Sollverlauf der Differenztemperatur gespeichert sein. Die elektronische Steuerungseinrichtung 31 ist dann dazu ausgebildet, während eines Ladevorgangs einen zeitlichen Verlauf der Differenztemperatur zu speichern und den zeitlichen Verlauf der Differenztemperatur mit dem zeitlichen Sollverlauf der Differenztemperatur zu vergleichen, wobei bei Überschreiten des Sollverlaufs der Differenztemperatur um eine vorgegebene Abweichung durch den Verlauf der Differenztemperatur das Steuersignal zum Steuern des Ladestroms ausgegeben wird.

Alternativ oder zusätzlich ist in der Speichereinrichtung 32 eine Vielzahl von jeweils unterschiedlichen Umgebungstemperaturen und jeweils einem zeitlichen Verlauf des Ladestroms zugeordneten zeitlichen Sollverläufen der Differenztemperatur gespeichert. Die elektronische Steuerungseinrichtung 31 ist dann dazu ausgebildet, während eines Ladevorgangs einen zeitlichen Verlauf der Differenztemperatur zu speichern und diesen zeitlichen Verlauf der Differenztemperatur mit dem der Umgebungstemperatur zugeordneten zeitlichen Sollverlauf der Differenztemperatur zu vergleichen. Bei Überschreiten des der Umgebungstemperatur zugeordneten Sollverlaufs der Differenztemperatur um eine vorgegebene Abweichung durch den Verlauf der Differenztemperatur gibt dann die elektronische Steuerungseinrichtung 31 das Steuersignal zum Steuern des Ladestroms aus.

Alternativ oder zusätzlich ist die elektronische Steuerungseinrichtung 31 dazu ausgebildet, eine Vielzahl von während Ladevorgängen ermittelter Differenztemperaturverläufe in der Speichereinrichtung 32 zu speichern, wobei die Differenztemperaturverläufe jeweils einer während des jeweiligen Ladevorganges gemessenen Umgebungstemperatur und einem Verlauf des jeweiligen Ladestroms zugeordnet sind. Basierend auf den gespeicherten Differenztemperaturverläufen ist die elektronische Steuerungseinrichtung 31 dazu ausgebildet, jeweiligen Umgebungstemperaturen und jeweiligen Ladestromverläufen zugeordnete Durchschnittsdifferenztemperaturen zu ermitteln. Die elektronische Steuerungseinrichtung 31 vergleicht dann die Differenztemperatur mit der der ermittelten Umgebungstemperatur und dem ermittelten Verlauf des Ladestroms zugeordneten Durchschnittsdifferenztemperatur und gibt bei Überschreiten der Durchschnittsgrenztemperatur durch die Differenztemperatur das Steuersignal zum Steuern des Ladestroms aus.

Die Steuerungseirichtung 31 ist alternativ oder zusätzlich dazu angepasst, nach einer vorbestimmten Zeit, in der kein Ladevorgang mittels des Ladesystems durchgeführt wurde (Betriebspause), die Temperatur der ersten Temperaturmessfühler 12 miteinander zu vergleichen. Die zwei Leistungskontakte 11 sollten sich während der Betriebspause der durch den Umgebungstemperatursensor 33 bestimmten Temperatur angleichen. Wenn zum Ende der Betriebspause jedoch mittels der Steuerungseinrichtung 31 festgestellt wird, dass die mittels der zwei ersten Temperaturmessfühler 12 ermittelten Temperaturen der zwei Leistungskontakte 11 zu stark voneinander abweichen, d.h. eine Temperaturdifferenz aufweisen, die eine vorbestimmte Temperaturdifferenz übersteigt, dann liegt sehr wahrscheinlich ein Fehler von einem der zwei Temperaturmessfühler 12 vor. Ein zeitgleicher Fehler von beiden ersten Temperaturmessfühler 12 ist sehr unwahrscheinlich. Somit ist eine Selbstüberwachung des Ladesystems 1 möglich und es kann verhindert werden, dass Fehler der ersten Temperaturmessfühler 12 als Fehler der Leistungskontakte 11 interpretiert werden.

### Bezugszeichenliste

- 1: Ladesystem
- 10: Ladestecker
- 11: stromführendes Bauteil / Leistungskontakt
- 12: (erster) Temperatursensor
- 20: Ladekabel
- 22: (zweiter) Temperatursensor
- 30: Ladestation
- 31: elektronische Steuerungseinrichtung
- 32: Speichereinrichtung
- 33: Umgebungstemperatursensor
- 34: Datenleitung (zwischen elektronischer Steuerungseinrichtung und Speichereinrichtung)
- 40: Datenleitung (zwischen elektronischer Steuerungseinrichtung und Temperatursensor bzw. Umgebungstemperatursensor)

## Patentansprüche

1. Ladesystem (1) zur Übertragung eines elektrischen Ladestroms an einen Energieempfänger, wobei das Ladesystem (1) folgendes aufweist:
- einen Ladestecker (10) zur Kopplung mit einer korrespondierenden Verbindungsvorrichtung;
- eine elektronische Steuerungseinrichtung (31); und
- zumindest einen Temperatursensor (12, 22) zur Bestimmung einer Temperatur eines stromführenden Bauteils (11, 20) des Ladesystems (1), wobei der Temperatursensor (12, 22) mit der elektronischen Steuerungseinrichtung (31) zum Ausgeben von die Temperatur des stromführenden Bauteils (11, 20) repräsentierenden Temperaturmessdaten gekoppelt ist;
- einen Umgebungstemperatursensor (33) zur Bestimmung einer Umgebungstemperatur des Ladesystems (1);
- wobei der Umgebungstemperatursensor (33) mit der elektronischen Steuerungseinrichtung (31) zum Ausgeben von die Umgebungstemperatur des Ladesystems (1) repräsentierenden Umgebungstemperaturmessdaten gekoppelt ist; und
- wobei die elektronische Steuerungseinrichtung (31) dazu ausgebildet ist, basierend auf den Temperaturmessdaten und den Umgebungstemperaturmessdaten eine Differenztemperatur zwischen der Temperatur des stromführenden Bauteils (11) und der Umgebungstemperatur zu ermitteln und basierend auf der ermittelten Differenztemperatur ein Steuersignal zum Steuern des Ladestroms auszugeben,
wobei das Ladesystem (1) durch folgende Merkmale **gekennzeichnet** ist:
- das Ladesystem (1) weist ferner eine Speichereinrichtung (32) auf, die mit der elektronischen Steuerungseinrichtung (31) zum Austausch von elektronischen Daten verbunden ist;
- in der Speichereinrichtung (32) ist eine Vielzahl von jeweils unterschiedlichen Umgebungstemperaturen zugeordneten Grenzdifferenztemperaturen gespeichert; und
- die elektronische Steuerungseinrichtung (31) ist dazu ausgebildet, die Differenztemperatur mit der der ermittelten Umgebungstemperatur zugeordneten Grenzdifferenztemperatur zu vergleichen und bei Überschreiten der Grenzdifferenztemperatur durch die Differenztemperatur das Steuersignal zum Steuern des Ladestroms auszugeben.

2. Ladesystem (1) nach Anspruch 1 **gekennzeichnet durch** die folgenden Merkmale:
- in der Speichereinrichtung (32) ist ein einem zeitliche Verlauf des Ladestroms zugeordneter zeitlicher Sollverlauf der Differenztemperatur gespeichert;
- die elektronische Steuerungseinrichtung (31) ist dazu ausgebildet, während eines Ladevorgangs einen zeitlichen Verlauf der Differenztemperatur zu speichern;
- die elektronische Steuerungseinrichtung (31) ist dazu ausgebildet, den zeitlichen Verlauf der Differenztemperatur mit dem zeitlichen Sollverlauf der Differenztemperatur zu vergleichen; und
- die elektronische Steuerungseinrichtung (31) ist dazu ausgebildet, bei Überschreiten des Sollverlaufs der Differenztemperatur um eine vorgegebene Abweichung durch den Verlauf der Differenztemperatur das Steuersignal zum Steuern des Ladestroms auszugeben.

3. Ladesystem (1) nach einem der Ansprüche 1 bis 2, **gekennzeichnet durch** die folgenden Merkmale:
- in der Speichereinrichtung (32) ist eine Vielzahl von jeweils unterschiedlichen Umgebungstemperaturen und jeweils einem zeitlichen Verlauf des Ladestroms zugeordneten zeitlichen Sollverläufen der Differenztemperatur gespeichert;
- die elektronische Steuerungseinrichtung (31) ist dazu ausgebildet, während eines Ladevorgangs einen zeitlichen Verlauf der Differenztemperatur zu speichern;
- die elektronische Steuerungseinrichtung (31) ist dazu ausgebildet, den zeitlichen Verlauf der Differenztemperatur mit dem der Umgebungstemperatur zugeordneten zeitlichen Sollverlauf der Differenztemperatur zu vergleichen; und
- die elektronische Steuerungseinrichtung (31) ist dazu ausgebildet, bei Überschreiten des der Umgebungstemperatur zugeordneten Sollverlaufs der Differenztemperatur um eine vorgegebene Abweichung durch den Verlauf der Differenztemperatur das Steuersignal zum Steuern des Ladestroms auszugeben.

4. Ladesystem (1) nach einem der Ansprüche 1 bis 3, **gekennzeichnet durch** die folgenden Merkmale:
- die elektronische Steuerungseinrichtung (31) ist dazu ausgebildet, eine Vielzahl von während Ladevorgängen ermittelter Differenztemperaturverläufe in der Speichereinrichtung (32) zu speichern, wobei die Differenztemperaturverläufe jeweils einer während des jeweiligen Ladevorganges gemessenen Umgebungstemperatur und einem Verlauf des jeweiligen Ladestroms zugeordnet sind;
- die elektronische Steuerungseinrichtung (31) ist dazu ausgebildet, basierend auf den gespeicherten Differenztemperaturverläufen jeweiligen Umgebungstemperaturen und jeweiligen Ladestromverläufen zugeordnete Durchschnittsdifferenztemperaturen zu ermitteln; und
- die elektronische Steuerungseinrichtung (31) ist dazu ausgebildet, die Differenztemperatur mit der der ermittelten Umgebungstemperatur und dem ermittelten Verlauf des Ladestroms zugeordneten Durchschnittsdifferenztemperatur zu vergleichen und bei Überschreiten der Durchschnittsgrenzdifferenztemperatur durch die Differenztemperatur das Steuersignal zum Steuern des Ladestroms auszugeben.

5. Ladesystem (1) nach einem der vorhergehenden Ansprüche, **dadurch gekennzeichnet, dass** das zumindest eine stromführende Bauteil (11) ein Leistungskontakt (11) des Ladesteckers (10) ist.

6. Ladesystem (1) nach einem der vorhergehenden Ansprüche, **dadurch gekennzeichnet, dass** das Ladesystem (1) ein Ladekabel (20) mit zumindest zwei innerhalb des Ladekabels (20) angeordneten Ladeleitungen aufweist, wobei das zumindest eine stromführende Bauteil eine Ladeleitung des Ladekabels (20) ist.

7. Ladesystem (1) nach einem der vorhergehenden Ansprüchen, **dadurch gekennzeichnet, dass** der Umgebungstemperatursensor (33) an einer Außenseite des Ladesteckers (10) angeordnet ist.

8. Ladesystem (1) nach einem der vorhergehenden Ansprüche, **dadurch gekennzeichnet, dass** das Ladesystem eine Ladestation (30) aufweist, die mit dem Ladestecker (10) elektrisch gekoppelt ist, wobei der Umgebungstemperatursensor (33) an der Ladestation (30) angeordnet ist.

## Claims

1. A charging system (1) for transmitting an electric charging current to an energy receiver, wherein the charging system (1) comprises the following:
- a charging plug (10) for coupling to a corresponding connecting apparatus;
- an electronic control device (31);
- at least one temperature sensor (12, 22) for determining a temperature of a current-carrying component (11, 20) of the charging system (1), wherein the temperature sensor (12, 22) is data-coupled to the electronic control device (31) for the purpose of outputting temperature measurement data which represents the temperature of the current-carrying component (11, 20),
- an ambient temperature sensor (33) for determining an ambient temperature of the charging system (1);
- wherein the ambient temperature sensor (33) is coupled to the electronic control device (31) for the purpose of outputting ambient temperature measurement data which represents the ambient temperature of the charging system (1); and
- wherein the electronic control device (31) is designed to ascertain a differential temperature between the temperature of the current-carrying component (11) and the ambient temperature based on the temperature measurement data and the ambient temperature measurement data and to output a control signal for the purpose of controlling the charging current based on the ascertained differential temperature,
wherein the charging system (1) is **characterized by** the following features:
- the charging system (1) further has a memory device (32) which is connected to the electronic control device (31) for the purpose of interchanging electronic data;
- a large number of limit differential temperatures which are associated with different ambient temperatures in each case are stored in the memory device (32); and
- the electronic control device (31) is designed to compare the differential temperature with the limit differential temperature which is associated with the ascertained ambient temperature and to output the control signal for the purpose of controlling the charging current when the limit differential temperature is exceeded by the differential temperature.

2. The charging system (1) as claimed in claim 1, **characterized by** the following features:
- a setpoint time profile of the differential temperature which is associated with a time profile of the charging current is stored in the memory device (32);
- the electronic control device (31) is designed to store a time profile of the differential temperature during a charging process;
- the electronic control device (31) is designed to compare the time profile of the differential temperature with the setpoint time profile of the differential temperature; and
- the electronic control device (31) is designed to output the control signal for the purpose of controlling the charging current when the setpoint profile of the differential temperature is exceeded by the profile of the differential temperature by a prespecified amount.

3. The charging system (1) as claimed in one of claims 1 or 2, **characterized by** the following features:
- a large number of setpoint time profiles of the differential temperature which are associated with different ambient temperatures in each case and with a time profile of the charging current in each case are stored in the memory device (32);
- the electronic control device (31) is designed to store a time profile of the differential temperature during a charging process;
- the electronic control device (31) is designed to compare the time profile of the differential temperature with the setpoint time profile of the differential temperature which is associated with the ambient temperature; and
- the electronic control device (31) is designed to output the control signal for the purpose of controlling the charging current when the setpoint profile of the differential temperature which is associated with the ambient temperature is exceeded by the profile of the differential temperature by a prespecified amount.

4. The charging system (1) as claimed in one of claims 1 to 3, **characterized by** the following features:
- the electronic control device (31) is designed to store a large number of differential temperature profiles, which are ascertained during charging processes, in the memory device (32), wherein the differential temperature profiles are each associated with an ambient temperature which is measured during the respective charging process and with a profile of the respective charging current;
- the electronic control device (31) is designed to ascertain average differential temperatures which are associated with respective ambient temperatures and respective charging current profiles based on the stored differential temperature profiles; and
- the electronic control device (31) is designed to compare the differential temperature with the average differential temperature which is associated with the ascertained ambient temperature and the ascertained profile of the charging current, and to output the control signal for the purpose of controlling the charging current when the average limit differential temperature is exceeded by the differential temperature.

5. The charging system (1) as claimed in one of the preceding claims, **characterized in that** the at least one current-carrying component (11) is a power contact (11) of the charging plug (10).

6. The charging system (1) as claimed in one of the preceding claims, **characterized in that** the charging system (1) has a charging cable (20) with at least two charging lines which are arranged within the charging cable (20), wherein the at least one current-carrying component is a charging line of the charging cable (20).

7. The charging system (1) as claimed in one of the preceding claims, **characterized in that** the ambient temperature sensor (33) is arranged on an outer side of the charging plug (10).

8. The charging system (1) as claimed in one of the preceding claims, **characterized in that** the charging system has a charging station (30) which is electrically coupled to the charging plug (10), wherein the ambient temperature sensor (33) is arranged on the charging station (30).

## Revendications

1. Système de charge (1) destiné à la transmission d'un courant de charge à un récepteur d'énergie, dans lequel le système de charge (1) présente les éléments suivants :
- une prise de charge (10) destinée à être couplée à un dispositif de connexion correspondant ;
- un dispositif de commande (31) électronique ; et
- au moins un capteur de température (12, 22) pour la détermination d'une température d'un composant conducteur de courant (11, 20) du système de charge (1), dans lequel le capteur de température (12, 22) est couplé au dispositif de commande (31) électronique pour la sortie de données de mesure de température représentant la température du composant conducteur de courant (11, 20) ;
- un capteur de température ambiante (33) pour la détermination d'une température ambiante du système de charge (1) ;
- dans lequel le capteur de température ambiante (33) est couplé au dispositif de commande (31) électronique pour la sortie de données de mesure de température ambiante représentant la température ambiante du système de charge (1) ; et
- dans lequel le dispositif de commande (31) électronique est conçu pour déterminer, sur la base des données de mesure de température et les données de mesure de température ambiante, une température différentielle entre la température du composant conducteur de courant (11) et la température ambiante, et pour émettre, sur la base de la température différentielle déterminée, un signal de commande pour la commande du courant de charge,
dans lequel le système de charge (1) est **caractérisé par** les caractéristiques suivantes :
- le système de charge (1) présente en outre un dispositif de mémoire (32) qui est connecté au dispositif de commande (31) électronique pour l'échange de données électroniques ;
- une pluralité de températures différentielles limites associées à des températures ambiantes différentes respectives est enregistrée dans le dispositif de mémoire (32) ; et
- le dispositif de commande (31) électronique est conçu pour comparer la température différentielle à la température différentielle limite associée à la température ambiante déterminée et pour émettre le signal de commande pour la commande du courant de charge lorsque la température différentielle dépasse la température différentielle limite.

2. Système de charge (1) selon la revendication 1, **caractérisé par** les caractéristiques suivantes :
- une évolution temporelle de consigne de la température différentielle, laquelle évolution est associée à l'évolution temporelle du courant de charge, est enregistrée dans le dispositif de mémoire (32) ;
- le dispositif de commande (31) électronique est conçu pour enregistrer, durant un processus de charge, une évolution temporelle de la température différentielle ;
- le dispositif de commande (31) électronique est conçu pour comparer l'évolution temporelle de la température différentielle à l'évolution temporelle de consigne de la température différentielle ; et
- le dispositif de commande (31) électronique est conçu pour émettre le signal de commande pour la commande du courant de charge lorsque l'évolution de la température différentielle dépasse d'un écart prédéfini l'évolution de consigne de la température différentielle.

3. Système de charge (1) selon l'une quelconque des revendications 1 à 2, **caractérisé par** les caractéristiques suivantes :
- une pluralité de températures ambiantes respectivement différentes et des évolutions temporelles de consigne de la température différentielle associées respectivement à une évolution temporelle de courant de charge sont enregistrées dans le dispositif de mémoire (32) ;
- le dispositif de commande (31) électronique est conçu pour enregistrer, durant un processus de charge, une évolution temporelle de la température différentielle ;
- le dispositif de commande (31) électronique est conçu pour comparer l'évolution temporelle de la température différentielle à l'évolution temporelle de consigne de la température différentielle associée à la température ambiante ; et
- le dispositif de commande (31) électronique est conçu pour émettre le signal de commande pour la commande du courant de charge lorsque l'évolution de la température différentielle dépasse d'un écart prédéfini l'évolution de consigne de la température différentielle associée à la température ambiante.

4. Système de charge (1) selon l'une quelconque des revendications 1 à 3, **caractérisé par** les caractéristiques suivantes :
- le dispositif de commande (31) électronique est conçu pour enregistrer une pluralité d'évolutions de température différentielle déterminées durant des processus de charge dans le dispositif de mémoire (32), dans lequel les évolutions de température différentielle sont associées respectivement à une température ambiante mesurée durant le processus de charge respectif et à une évolution du courant de charge respectif ;
- le dispositif de commande (31) électronique est conçu pour déterminer, sur la base des évolutions de température différentielle enregistrées, les températures différentielles moyennes associées aux températures ambiantes respectives et aux évolutions de courant de charge respectives ; et
- le dispositif de commande (31) électronique est conçu pour comparer la température différentielle à la température différentielle moyenne associée à la température ambiante déterminée et à l'évolution du courant de charge déterminée et pour émettre le signal de commande pour la commande du courant de charge lorsque la température différentielle dépasse la température différentielle limite moyenne.

5. Système de charge (1) selon l'une quelconque des revendications précédentes, **caractérisé en ce que** l'au moins un composant conducteur de courant (11) est un contact de puissance (11) de la prise de charge (10).

6. Système de charge (1) selon l'une quelconque des revendications précédentes, **caractérisé en ce que** le système de charge (1) présente un câble de charge (20) comprenant au moins deux conduites de charge à l'intérieur du câble de charge (20), dans lequel l'au moins un composant conducteur de courant est une conduite de charge du câble de charge (20).

7. Système de charge (1) selon l'une quelconque des revendications précédentes, **caractérisé en ce que** le capteur de température ambiante (33) est disposé sur un côté extérieur de la prise de charge (10).

8. Système de charge (1) selon l'une quelconque des revendications précédentes, **caractérisé en ce que** le système de charge présente une station de charge (30), qui est couplée électriquement à la prise de charge (10), dans lequel le capteur de température ambiante (33) est disposé sur la station de charge (30).
